# EUROPEAN PATENT SPECIFICATION

(11) **EP 3 327 085 B1**
(45) Date of publication and mention of the grant of the patent: **13.05.2020**
(21) Application number: 16827799.4
(22) Date of filing: 20.07.2016
(51) Int. Cl.: C08L 67/02, C08J 3/22

(54) **METHOD FOR MANUFACTURING POLYBUTYLENE TEREPHTHALATE RESIN COMPOSITION AND METHOD FOR MANUFACTURING POLYBUTYLENE TEREPHTHALATE RESIN MOLDED ARTICLE**
VERFAHREN ZUR HERSTELLUNG EINER POLYBUTYLENTEREPHTHALATHARZZUSAMMENSETZUNG UND VERFAHREN ZUR HERSTELLUNG EINES FORMKÖRPERS AUS POLYBUTYLENTEREPHTHALATHARZ
PROCÉDÉ DE FABRICATION DE COMPOSITION DE RÉSINE DE POLYTÉRÉPHTALATE DE BUTYLÈNE ET PROCÉDÉ DE FABRICATION D'ARTICLE MOULÉ EN RÉSINE DE POLYTÉRÉPHTALATE DE BUTYLÈNE

(30) Priority: 22.07.2015 JP 2015144844
(43) Date of publication of application: 30.05.2018
(73) Proprietor: Polyplastics Co., Ltd., Tokyo 108-8280 (JP)
(72) Inventor: GOSHIMA, Kazuya, Fuji-shi Shizuoka 416-8533 (JP); SATO, Yuri, Fuji-shi Shizuoka 416-8533 (JP)
(74) Representative: Lux, Berthold
(86) International application number: PCT/JP2016/071289
(87) International publication number: WO 2017/014239

(56) References cited:
- WO-A1-2013/146281
- WO-A1-2014/178271
- "VDA 277 Nichtmetallische Werkstoffe der Kfz-Innenausstattung - Bestimmung der Emission organischer Verbindungen", VDA BROCHURE, VERBAND DER AUTOMOBILINDUSTRIE E.V, DE , 1 January 1995 (1995-01-01), page 6pp, XP009509173, Retrieved from the Internet: URL:https://www.vda.de/de/services/Publika tionen/nichtmetallische-werkstoffe-der-k-% E2%80%A6.html

## Description

### TECHNICAL FIELD

The present invention relates to a method for manufacturing a polybutylene terephthalate resin composition and a method for manufacturing a polybutylene terephthalate resin molded article.

### BACKGROUND ART

Polyester resins have excellent mechanical characteristics, heat resistance, and moldability and are therefore widely used in, for example, automotive parts, films, and electrical and electronic parts. In particular, a polybutylene terephthalate resin (hereinafter, also referred to as "PBT"), one type of the polyester resins, shows a high reinforcing effect by an inorganic reinforcing material and has excellent chemical resistance and is therefore widely used as a raw material for producing industrial molded articles, such as connectors, relays, switches, and other components, of automobiles and electrical and electronic equipment.

However, the above-mentioned polybutylene terephthalate resin shows a phenomenon of emitting gases occurring by, for example, decomposition of the resin during molding when the molded article is used. Among the occurring gases, the emission of a low-molecular-weight organic compound that is to be volatile even at ordinary temperature (volatile organic compound: VOC) is problematic.

Recently, in automotive manufacturers, standards for VOC amounts emitted from interior parts of an automobile have been established, and various measuring methods and regulations have been established in each automotive manufacturer. The German Association of the Automotive Industry has established a test method, VDA 277, for detecting volatile organic compounds.

Specifically, for example, as described in page 26 of C.Henneuse and T.Pacary(2003) Emissions from Plastics, Rapra Review Reports, Vol.14, No.1, there is a demand for reducing the VOC emission amount, measured by the VOC measuring method defined in VDA 277, to 50 ugC/g or less.

JP H06 9858 A describes an increase in the amount of tetrahydrofuran (THF), which is a volatile organic compound, occurring in molding in a polybutylene terephthalate resin having a large amount of terminal hydroxyl groups, and discloses a use of a polybutylene terephthalate resin having a low concentration of terminal hydroxyl groups. It is also disclosed that the terminal hydroxyl groups of a polybutylene terephthalate resin can be stabilized by adding an alkali metal salt to the polybutylene terephthalate resin. However, as also described in JP H06 9858 A, since "the concentration of terminal hydroxyl groups is determined by subtracting the number of terminal COOH groups from the total number of terminal groups", "a low concentration of terminal hydroxyl groups" simultaneously means "a large number of terminal COOH groups". Such a polybutylene terephthalate resin is disadvantageous in hydrolysis resistance.

JP H10 30054 A discloses that the occurrence of THF is prevented by adding a titanium catalyst, a phosphorus compound, and an alkali or alkaline-earth metal during the polymerization of the polybutylene terephthalate resin. However, this method has problems, such as a reduction in the rate of polymerization, depending on the type and the addition amount of the alkali metal compound used.

In addition, JP 2010 100668 A discloses a method for reducing the concentrations of foreign substances and terminal carboxyl groups while preventing a reduction in the rate of polymerization by divided addition of an organic titanium compound and an alkali metal salt during the polymerization of the polybutylene terephthalate resin. However, in this method, since the step of adding an organic titanium compound and an alkali metal salt is divided, the control is complicated. Furthermore, in this method, a device for addition is additionally required, and diversion of existing facilities is therefore difficult. Accordingly, the method needs a further investment and is economically disadvantageous.

WO 2014/178271 A1 discloses a technique for making it possible for VOCs including a VOC other than THF to be hardly released from a molded article produced by molding a polybutylene terephthalate resin composition, wherein a polybutylene terephthalate resin composition comprising a polybutylene terephthalate resin produced by a direct esterification method and calcium carbonate is used. WO 2013/146281 A1 discloses a technique for making it harder for VOCs including THF as well as other VOCs to be released from a molded article that is produced by molding a polybutylene terephthalate resin composition, wherein a polybutylene terephthalate resin composition is used, which comprises a polybutylene terephthalate resin that is produced by a direct esterification method and an alkaline compound.

### DISCLOSURE OF THE INVENTION

### Problems to be Solved by the Invention

If a VOC occurs during the molding of a polybutylene terephthalate resin molded article containing a polybutylene terephthalate resin, the VOC is readily emitted from the molded article when the molded article is used.

The present invention was made for solving the above-described problems, and it is an object of the present invention to provide a technology of making it difficult for VOCs, including VOCs other than THF, to be emitted from a polybutylene terephthalate resin molded article including a polybutylene terephthalate resin.

### Means for Solving the Problems

The present inventors have diligently studied for solving the above-mentioned problems. As a result, the inventors have found that in the use of a polybutylene terephthalate resin produced by transesterification, as in JP H06 9858 A, as a polybutylene terephthalate resin being a main component of the matrix resin constituting a polybutylene terephthalate resin molded article, aldehyde derived from alcohol as a by-product causes an increase in the VOC amount occurring during the molding. The inventors have further found that the problem caused by the aldehyde can be efficiently prevented by a simple process and also the VOC amount emitted during the use of the molded article can be reduced by adding an alkali compound in a master batch form including a polyalkylene terephthalate resin and the alkali compound or by using, as the polybutylene terephthalate resin, a polybutylene terephthalate resin produced by direct esterification without adding an alkali compound, instead of a polybutylene terephthalate resin produced by direct esterification adding an alkali compound, and the present invention was accomplished. More specifically, the present invention provides the following aspects.
(1) A method for manufacturing a polybutylene terephthalate resin composition including a polybutylene terephthalate resin produced by direct esterification and an alkali compound, the method comprising a step of melting and kneading a master batch including a polyalkylene terephthalate resin and the alkali compound with the polybutylene terephthalate resin.
(2) The manufacturing method according to aspect (1), further comprising a step of preparing the master batch by melting and kneading the polyalkylene terephthalate resin and the alkali compound.
(3) The manufacturing method according to aspect (1), further comprising a step of preparing the master batch during the production of the polyalkylene terephthalate resin by an esterification reaction or a transesterification reaction and/or a polycondensation reaction in the presence of the alkali compound.
(4) The manufacturing method according to any one of aspects (1) to (3), wherein the amount of the alkali compound in the polybutylene terephthalate resin composition is 10 to 45 mass ppm based on the total mass of the polybutylene terephthalate resin and the alkali compound.
(5) The manufacturing method according to any one of aspects (1) to (4), wherein the alkali compound is potassium acetate.
(6) A method for manufacturing a polybutylene terephthalate resin molded article including a polybutylene terephthalate resin produced by direct esterification and an alkali compound, the method comprising the steps of preparing a polybutylene terephthalate resin composition by the manufacturing method according to any one of aspects (1) to (5) as a molding pellet, and then molding the polybutylene terephthalate resin composition molding pellet into the polybutylene terephthalate resin molded article.
(7) A method for manufacturing a polybutylene terephthalate resin molded article including a polybutylene terephthalate resin produced by direct esterification and an alkali compound, the method comprising the steps of dry-blending a master batch including a polyalkylene terephthalate resin and the alkali compound with the polybutylene terephthalate resin and then molding the blended mixture into the polybutylene terephthalate resin molded article.
(8) The manufacturing method according to aspect (7), further comprising a step of preparing the master batch by melting and kneading the polyalkylene terephthalate resin and the alkali compound.
(9) The manufacturing method according to aspect (7), further comprising a step of preparing the master batch during the production of the polyalkylene terephthalate resin by an esterification reaction or a transesterification reaction and/or a polycondensation reaction in the presence of the alkali compound.
(10) The manufacturing method according to any one of aspects (7) to (9), wherein the amount of the alkali compound in the polybutylene terephthalate resin molded article is 10 to 45 mass ppm based on the total mass of the polybutylene terephthalate resin and the alkali compound.
(11) The manufacturing method according to any one of aspects (7) to (10), wherein the alkali compound is potassium acetate.
(12) The manufacturing method according to any one of aspects (6) to (11), wherein the VOC emission amount from the molded article is 50 µgC/g or less when measured by a VOC measuring method defined in the German Association of the Automotive Industry VDA 277.
(13) The manufacturing method according to any one of aspects (6) to (12), wherein the polybutylene terephthalate resin in the molded article has terminal carboxyl groups in an amount of 40 meq/kg or less.
(14) The manufacturing method according to any one of aspects (6) to (13), wherein the molded article is an interior part of an automobile.

### Effects of the Invention

According to the present invention, a polybutylene terephthalate resin molded article emitting a low amount of VOCs in the use can be provided.

### PREFERRED MODE FOR CARRYING OUT THE INVENTION

Embodiments of the present invention will now be described. Note that the present invention is not limited to the following embodiments.

### <Method for manufacturing polybutylene terephthalate resin composition>

The present invention relates to, in one embodiment, a method for manufacturing a polybutylene terephthalate resin composition including a polybutylene terephthalate resin produced by direct esterification and an alkali compound, the method comprising: a step of melting and kneading a master batch including a polyalkylene terephthalate resin and the alkali compound with the polybutylene terephthalate resin. According to the method for manufacturing a polybutylene terephthalate resin composition according to the present invention, the VOC amount occurring from a molded article of the resulting polybutylene terephthalate resin composition can be reduced by adding an alkali compound in a master batch form including a polyalkylene terephthalate resin and the alkali compound, compared to the direct addition of the alkali compound.

The master batch may be prepared by any method. For example, the master batch may be prepared as a pellet by melting and kneading the polyalkylene terephthalate resin and the alkali compound with a single or twin screw extruder or another melting and kneading device. On this occasion, a plurality of extruders or other melting and kneading devices may be used. All components may be simultaneously fed from a hopper. Alternatively, a part of the components may be fed from a side feed opening. In the case of preparing a master batch by melting and kneading, it is unnecessary to consider, for example, inhibition of the polymerization reaction due to the alkali compound, unlike the case, described later, of preparing a master batch at the time of producing the polyalkylene terephthalate resin. Accordingly, the preparation by melting and kneading is advantageous in a high degree of freedom of addition amount. The polyalkylene terephthalate resin that is used as a base of the master batch is preferably a polyalkylene terephthalate resin produced by direct esterification (for example, a polybutylene terephthalate resin produced by direct esterification) from the viewpoint of suppressing the amount of aldehyde occurring from the molded article, but may be a polyalkylene terephthalate resin produced by transesterification (for example, a polybutylene terephthalate resin produced by transesterification) by controlling the addition amount of the master batch to a range that does not impair the effects of the present invention, as described later.

In the master batch to be prepared by melting and kneading, the addition amount of the polyalkylene terephthalate resin is preferably 99% to 99.99% by mass, more preferably 99.5% to 99.98% by mass, particularly preferably 99.7% to 99.95% by mass, and most preferably 99.8% to 99.9% by mass, and the addition amount of the alkali compound is preferably 0.01% to 1% by mass, more preferably 0.02% to 0.5% by mass, particularly preferably 0.05% to 0.3% by mass, and most preferably 0.1% to 0.2% by mass. When the addition amounts of the polyalkylene terephthalate resin and the alkali compound are within the above-mentioned ranges, the alkali compound is readily uniformly dispersed in the master batch, which allows the alkali compound to be readily uniformly dispersed in the polybutylene terephthalate resin composition and its molded article.

The master batch may be prepared at the time of producing the polyalkylene terephthalate resin. Specifically, a dicarboxylic acid component mainly composed of terephthalic acid (or its ester-forming derivative) and a glycol component mainly composed of an alkylene glycol (or its ester-forming derivative) are subjected to an esterification reaction (or a transesterification reaction) in the presence of an organic titanium compound and then to an esterification reaction or a transesterification reaction and/or a polycondensation reaction in the presence of an alkali compound during the production of a polyalkylene terephthalate resin by a continuous or stepwise polycondensation reaction. As a result, a master batch can be prepared. In the case of preparing a master batch at the time of producing the polyalkylene terephthalate resin, the polyalkylene terephthalate resin as the base of the master batch receives less thermal history compared to the case of preparing the master batch by melting and kneading. Consequently, for example, advantageously, thermal decomposition of the polyalkylene terephthalate resin is suppressed.

In the master batch prepared at the time of producing the polyalkylene terephthalate resin, the addition amount of the polyalkylene terephthalate resin is preferably 99.95% to 99.999% by mass, more preferably 99.96% to 99.995% by mass, particularly preferably 99.97% to 99.99% by mass, and most preferably 99.975% to 99.985% by mass, and the addition amount of the alkali compound is preferably 0.001% to 0.05% by mass, more preferably 0.005% to 0.04% by mass, particularly preferably 0.01% to 0.03% by mass, and most preferably 0.015% to 0.025% by mass. When the addition amounts of the polyalkylene terephthalate resin and the alkali compound are within the above-mentioned ranges, not only the alkali compound can be readily uniformly dispersed, but also the reaction at the time of producing the polyalkylene terephthalate resin is hardly inhibited. Accordingly, the master batch can be easily produced.

In the preparation of the master batch, it is preferred to feed the alkali compound in a state dissolved in water to a melting and kneading device, such as an extruder, or a reaction vessel, such as an esterification reaction vessel and a polycondensation reaction vessel. Consequently, the alkali compound is uniformly dispersed in the resin composition and the molded article. Furthermore, the alkali compound added in a solid state may act as a nucleating agent, but the alkali compound added in a state dissolved in water can be prevented from acting as a nucleating agent, therefore has a low risk of influencing the toughness and other factors, and is preferred. The concentration of the alkali compound of this aqueous solution is preferably 1 mol/L or more and 100 mol/L or less and more preferably 2 mol/L or more and 50 mol/L or less. This is because that when the concentration of the alkali compound is 1 mol/L or more, the moisture amount does not become too large, and hydrolysis of polybutylene terephthalate is not easily promoted, whereas when the concentration of the alkali compound is 100 mol/L or less, the alkali compound is readily uniformly dispersed.

In the method for manufacturing a polybutylene terephthalate resin composition according to the present invention, the resin composition can be prepared by generally known facilities and method for preparing resin compositions. For example, necessary components are molten and kneaded with a single or twin screw extruder or another melting and kneading device to prepare a resin composition as a molding pellet. In addition, a plurality of extruders or other melting and kneading devices may be used. All components may be simultaneously fed from a hopper. Alternatively, a part of the components may be fed from a side feed opening.

In the polybutylene terephthalate resin composition manufactured by adding a master match prepared by melting and kneading to a polybutylene terephthalate resin produced by the direct esterification, the addition amount of the polybutylene terephthalate resin produced by direct esterification is preferably 80% to 99.5% by mass, more preferably 90% to 99% by mass, and particularly preferably 95% to 98.5% by mass based on the total amount, 100% by mass, of the polybutylene terephthalate resin and the master batch prepared by melting and kneading; and the addition amount of the master batch prepared by melting and kneading is preferably 0.5% to 20% by mass, more preferably 1% to 10% by mass, and particularly preferably 1.5% to 5% by mass based on the total amount of the polybutylene terephthalate resin and the master match prepared by melting and kneading. In the polybutylene terephthalate resin composition manufactured by adding the master batch prepared at the time of producing the polyalkylene terephthalate resin to the polybutylene terephthalate resin produced by direct esterification, the addition amount of the polybutylene terephthalate resin produced by direct esterification is preferably 70% to 95% by mass, more preferably 75% to 90% by mass, and particularly preferably 80% to 88% by mass based on the total mass of the polybutylene terephthalate resin and the master batch prepared in the polymerization process; and the addition amount of the master batch prepared at the time of producing the polyalkylene terephthalate resin is preferably 5% to 30% by mass, more preferably 10% to 25% by mass, and particularly preferably 12% to 20% by mass based on the total mass of the polybutylene terephthalate resin and the master batch prepared at the time of producing the polyalkylene terephthalate resin. When the addition amounts of the polybutylene terephthalate resin and the master batch are within the above-mentioned ranges, the alkali compound is readily uniformly dispersed in the polybutylene terephthalate resin composition and its molded article, and even in the case of adding a master batch including a polyalkylene terephthalate resin produced by transesterification, the amount of aldehyde from the molded article is apt to be decreased.

### <Method for manufacturing polybutylene terephthalate resin molded article>

Another embodiment of the present invention relates to a method for manufacturing a polybutylene terephthalate resin molded article including a polybutylene terephthalate resin produced by direct esterification and an alkali compound, the method comprising: the steps of preparing a polybutylene terephthalate resin composition by the manufacturing method according to the present invention as a molding pellet, and then molding a polybutylene terephthalate resin composition molding pellet into the polybutylene terephthalate resin molded article; or the steps of dry-blending a master batch including a polyalkylene terephthalate resin and the alkali compound with the polybutylene terephthalate resin and then molding the blended mixture into the polybutylene terephthalate resin molded article. According to the method for manufacturing a polybutylene terephthalate resin molded article according to the present invention, an alkali compound is added in a master batch form including a polyalkylene terephthalate resin and the alkali compound to reduce the VOC amount occurring from the resulting polybutylene terephthalate resin molded article, compared to the case of directly adding the alkali compound.

The molding method is not particularly limited, and a conventionally known molding method, such as injection molding, can be used.

In the method for manufacturing a polybutylene terephthalate resin molded article according to the present invention, examples of the method for preparing a master batch include the above-mentioned methods.

In the polybutylene terephthalate resin molded article prepared by the method for manufacturing a polybutylene terephthalate resin molded article according to the present invention, the VOC emission amount is preferably 50 ugC/g or less, more preferably 35 ugC/g or less, and further preferably 30 µgC/g or less when measured by a VOC measuring method defined in the German Association of the Automotive Industry VDA 277. Accordingly, the VOC emission amount in the use of the molded article is small. The VOC emitted during the use is particularly problematic when the molded article is used inside a car or room, for example, in the use as an interior part of an automobile. The molded article described above can be preferably used inside a car or indoors. As described above, from the viewpoint of hydrolysis resistance, the polybutylene terephthalate resin in the molded article has terminal carboxyl groups in an amount of preferably 40 meq/kg or less and more preferably 25 meq/kg or more.

### [Polybutylene terephthalate resin]

The polybutylene terephthalate resin used in the present invention is a common polybutylene terephthalate resin and includes a repeating unit derived from at least terephthalic acid and a repeating unit derived from at least an alkylene glycol having 4 carbon atoms (1,4-butanediol).

The polybutylene terephthalate resin used in the present invention is a polybutylene terephthalate resin produced by direct esterification. Direct esterification and transesterification are known as the methods of producing such polybutylene terephthalate resins. In the present invention, the polybutylene terephthalate resin is produced by direct esterification, and accordingly, as described below, the VOC amount occurring from a molded article can be reduced.

The direct esterification is a method using terephthalic acid and 1,4-butanediol as main raw materials and reacting the terephthalic acid and the 1,4-butanediol in the presence of an esterification catalyst. Meanwhile, the transesterification is a method using a dialkyl terephthalate and 1,4-butanediol as main raw materials and reacting the terephthalic acid and the 1,4-butanediol in the presence of a transesterification catalyst.

In direct esterification, water is generated by esterification, whereas in the transesterification, alcohol is generated. For example, when a polybutylene terephthalate resin is produced using dimethyl terephthalate, methanol is generated. Methanol changes into formaldehyde and thereby increases the VOC amount occurring from a molded article. Thus, in the case of producing a polybutylene terephthalate resin by transesterification, alcohol is generated as a by-product. This alcohol changes into aldehyde and thereby increases the VOC amount occurring from a molded article. In contrast, direct esterification does not generate alcohol as a by-product, and therefore no emission of aldehyde derived from alcohol as a by-product occurs from a molded article.

In the present invention, it is sufficient that the polybutylene terephthalate resin is produced by the direct esterification, and the production conditions are not particularly limited. Usable examples of the esterification catalyst include antimony compounds, germanium compounds, titanium compounds, tin compounds, alkaline-earth metal compounds, manganese compounds, and zinc compounds, etc. The amount of the catalyst is also not particularly limited and can be appropriately determined.

The reaction conditions such as reaction temperature, reaction pressure, and reaction time are also not particularly limited and may be appropriately determined depending on, for example, the desired molecular weight.

The thus-produced polybutylene terephthalate resin includes a repeating unit derived from terephthalic acid and a repeating unit derived from 1,4-butanediol. The polybutylene terephthalate resin used in the present invention is not limited to a homopolybutylene terephthalate resin composed of a butylene terephthalate unit and may be a copolymer containing a butylene terephthalate unit in an amount of 60 mol% or more (in particular, 75 mol% or more and 95 mol% or less).

Examples of the dicarboxylic acid component (comonomer component) other than terephthalic acid include C₈₋₁₄ aromatic dicarboxylic acids such as isophthalic acid, phthalic acid, 2,6-naphthalenedicarboxylic acid, and 4,4'-dicarboxy diphenyl ether; C₄₋₁₆ alkanedicarboxylic acids such as succinic acid, adipic acid, azelaic acid, and sebacic acid; and C₅₋₁₀ cycloalkanedicarboxylic acids such as cyclohexanedicarboxylic acid. These dicarboxylic acid components may be used alone or in combination of two or more thereof.

Examples of the glycol component (comonomer component) other than 1,4-butanediol include C₂₋₁₀ alkylene glycols such as ethylene glycol, propylene glycol, trimethylene glycol, 1,3-butylene glycol, hexamethylene glycol, neopentyl glycol, and 1,3-octanediol; polyoxyalkylene glycols such as diethylene glycol, triethylene glycol, and dipropylene glycol; alicyclic diols such as cyclohexanedimethanol and hydrogenated bisphenol A; aromatic diols such as bisphenol A and 4,4'-dihydroxybiphenyl; and C₂₋₄ alkylene oxide adducts of bisphenol A such as ethylene oxide 2-mole adduct of bisphenol A and propylene oxide 3-mole adduct of bisphenol A. These glycol components can be used alone or in combination of two or more thereof.

The polybutylene terephthalate resin used in the present invention may have any amount of terminal carboxyl groups (hereinafter, also referred to as "CEG"). The present invention can reduce the VOC amount occurring from a molded article even if the polybutylene terephthalate resin having a small amount of terminal carboxyl groups, i.e., a large amount of terminal hydroxyl groups is used.

In a polybutylene terephthalate resin having terminal hydroxyl groups, the terminal hydroxyl groups generate tetrahydrofuran (THF) together with butylene groups that bind to the terminal hydroxyl groups. THF occurs when a molded article is formed using a polybutylene terephthalate resin having a large amount of terminal hydroxyl groups. Since THF is a VOC, the VOC amount emitted from the molded article is increased. However, in the present invention, the VOC emission amount can be suppressed by producing the polybutylene terephthalate resin by direct esterification and using the polybutylene terephthalate resin together with an alkali compound added in a master batch form, even if the polybutylene terephthalate resin used has a large amount of terminal hydroxyl groups.

In addition, a polybutylene terephthalate resin having a small amount of terminal carboxyl groups has excellent hydrolysis resistance. Accordingly, the molded article produced using a composition containing such a polybutylene terephthalate resin has excellent hydrolysis resistance and also is in low in the VOC emission amount.

Herein, a small amount of terminal carboxyl groups indicates that the polybutylene terephthalate resin before molding and/or in a molded article has a terminal carboxyl group amount of 40 meq/kg or less. From the viewpoint of further enhancing the hydrolysis resistance, the polybutylene terephthalate resin before molding and/or in a molded article preferably has a terminal carboxyl group amount of 25 meq/kg or less. The present invention can notably reduce the VOC amount occurring from a molded article even if the amount of the terminal carboxyl groups of a polybutylene terephthalate resin is thus reduced to 25 meq/kg or less to prevent the strength of the molded article from decreasing by hydrolysis under a high temperature and humidity environment. In the present specification, the terminal carboxyl group amount refers to the amount determined by dissolving a pulverized sample including a polybutylene terephthalate resin, such as a pulverized sample of a polybutylene terephthalate resin and a pulverized sample of a molded article including a polybutylene terephthalate resin, in benzyl alcohol at 215°C for 10 minutes and titrating the sample with an aqueous solution of 0.01 N sodium hydroxide.

The polybutylene terephthalate resin used in the present invention may have any intrinsic viscosity within a range that does not impair the object of the present invention. The polybutylene terephthalate resin preferably has an intrinsic viscosity (IV) of 0.65 dL/g or more and 1.4 dL/g or less. In the case of using a polybutylene terephthalate resin having an intrinsic viscosity in such a range, in particular, the resulting polybutylene terephthalate resin composition can have excellent moldability. The intrinsic viscosity can be controlled by blending polybutylene terephthalate resins having different intrinsic viscosities. For example, a polybutylene terephthalate resin having an intrinsic viscosity of 0.9 dL/g can be produced by blending a polybutylene terephthalate resin having an intrinsic viscosity of 1.0 dL/g and a polybutylene terephthalate resin having an intrinsic viscosity of 0.7 dL/g. The intrinsic viscosity (IV) of a polybutylene terephthalate resin can be measured in o-chlorophenol at 35°C.

The content of the polybutylene terephthalate resin in the polybutylene terephthalate resin composition or the polybutylene terephthalate resin molded article prepared by the manufacturing method according to the present invention is not particularly limited and is preferably 10% by mass or more and less than 99.99% by mass. A content of the polybutylene terephthalate resin of 30% by mass or more can improve the physical properties of a molded article and is therefore particularly preferred. The content is more preferably 50% by mass or more and less than 99.99% by mass.

### [Alkali compound]

The polybutylene terephthalate resin composition or the polybutylene terephthalate resin molded article prepared by the manufacturing method according to the present invention includes an alkali compound. The VOC amount emitted from a molded article can be reduced by adding the alkali compound.

The alkali compound that can be used in the present invention may be any type, and examples thereof include alkali metal salts and alkaline-earth metal salts, such as potassium chloride, potassium alum, potassium formate, tripotassium citrate, dipotassium hydrogen citrate, potassium dihydrogen citrate, potassium gluconate, potassium succinate, potassium butyrate, dipotassium oxalate, potassium hydrogen oxalate, potassium stearate, potassium phthalate, potassium hydrogen phthalate, potassium metaphosphate, potassium malate, tripotassium phosphate, dipotassium hydrogen phosphate, potassium dihydrogen phosphate, potassium nitrite, potassium benzoate, potassium hydrogen tartrate, potassium hydrogen oxalate, potassium biphthalate, potassium bitartrate, potassium bisulfate, potassium nitrate, potassium acetate, potassium hydroxide, potassium carbonate, sodium potassium carbonate, potassium bicarbonate, potassium lactate, potassium sulfate, potassium hydrogen sulfate, sodium chloride, sodium formate, trisodium citrate, disodium hydrogen citrate, sodium dihydrogen citrate, sodium gluconate, sodium succinate, sodium butyrate, disodium oxalate, sodium hydrogen oxalate, sodium stearate, sodium phthalate, sodium hydrogen phthalate, sodium metaphosphate, sodium malate, trisodium phosphate, disodium hydrogen phosphate, sodium dihydrogen phosphate, sodium nitrite, sodium benzoate, sodium hydrogen tartrate, sodium hydrogen oxalate, sodium biphthalate, sodium bitartrate, sodium bisulfate, sodium nitrate, sodium acetate, sodium hydroxide, sodium carbonate, sodium bicarbonate, sodium lactate, sodium sulfate, sodium hydrogen sulfate, lithium chloride, lithium formate, trillithium citrate, dilithium hydrogen citrate, lithium dihydrogen citrate, lithium gluconate, lithium succinate, lithium butyrate, dilithium oxalate, lithium hydrogen oxalate, lithium stearate, lithium phthalate, lithium hydrogen phthalate, lithium metaphosphate, lithium malate, trilithium phosphate, dilithium hydrogen phosphate, lithium dihydrogen phosphate, lithium nitrite, lithium benzoate, lithium hydrogen tartrate, lithium hydrogen oxalate, lithium biphthalate, lithium bitartrate, lithium bisulfate, lithium nitrate, lithium acetate, lithium hydroxide, lithium carbonate, lithium bicarbonate, lithium lactate, lithium sulfate, lithium hydrogen sulfate, calcium chloride, calcium formate, calcium citrate, calcium gluconate, calcium succinate, calcium butyrate, calcium oxalate, calcium stearate, calcium phthalate, calcium metaphosphate, calcium malate, calcium phosphate, calcium hydrogen phosphate, calcium dihydrogen phosphate, calcium nitrite, calcium benzoate, calcium tartrate, calcium hydrogen oxalate, calcium biphthalate, calcium bitartrate, calcium bisulfate, calcium nitrate, calcium acetate, calcium hydroxide, calcium carbonate, calcium lactate, and calcium sulfate. Among these alkali compounds, preferred are potassium acetate and calcium carbonate, and most preferred is potassium acetate.

The form of the alkali compound that is used in the present invention is not particularly limited, and examples thereof include a form of powder, a form of particles, a form of mass, and a form of tablets.

The content of the alkali compound in the polybutylene terephthalate resin composition or the polybutylene terephthalate resin molded article prepared by the manufacturing method according to the present invention may be determined according to a desired VOC emission amount and other factors and is therefore not specifically limited, but is preferably 10 to 45 mass ppm based on the total mass of the polybutylene terephthalate resin and the alkali compound. An alkali compound content of 10 mass ppm or more is preferred because the generation of VOCs derived from a monomer component can further sufficiently prevented, and an alkali compound content of 45 mass ppm or less is preferred because the hue (b value) of the molded article can be effectively improved and also the occurrence of VOCs caused by decomposition of the polybutylene terephthalate resin due to the alkali compound is further prevented. The alkali compound content is more preferably 20 to 40 mass ppm. Even if the alkali compound content is outside the above-mentioned preferred range, the VOC emission amount may be suppressed within a desired range depending on the type of the polybutylene terephthalate resin (for example, depending on the molecular weight, the amount of the terminal carboxyl groups, and the co-present copolymer component). Such a case is also within the scope of the present invention. In the present invention, the addition amount of the alkali compound can be greatly reduced by adding the alkali compound in a master batch form.

### [Other components]

The polybutylene terephthalate resin composition or the polybutylene terephthalate resin molded article prepared by the manufacturing method according to the present invention may include a component other than the above-described essential components. Examples of the other component include additives such as fillers (such as inorganic fillers), nucleating agents, pigments, antioxidants, stabilizers, plasticizers, lubricants, mold releasing agents, flame retardants; and other resins. Such an additional component may be added to the master batch and/or may be added at the time of melting and kneading or dry-blending the master batch with the polybutylene terephthalate resin.

### EXAMPLES

The present invention will now be described in more detail by the Examples, but is not limited to the following Examples.

### <Materials>

Polybutylene terephthalate resin produced by direct esterification: "DURANEX (registered trademark)", manufactured by WinTech Polymer Ltd., IV: 0.75 dL/g, the amount of terminal carboxyl groups: 11.3 meq/kg, provided that an alkali compound was not added during the production by direct esterification. Potassium acetate: manufactured by Wako Pure Chemical Industries, Ltd., potassium acetate

### <Method for producing master batch>

A polybutylene terephthalate resin produced by direct esterification and an aqueous solution of 50% by mass potassium acetate were mixed such that the mass ratio of the polybutylene terephthalate resin and potassium acetate was 99.9:0.1 to prepare a raw material. This raw material was fed into a single screw extruder (HS65, manufactured by Ishinaka Iron Works, Co., Ltd.) and was molten and kneaded to produce a master batch. The conditions excluding cooling time are as follows.

### (Melting and kneading conditions)

Cylinder temperature: 250°C
Screw speed: 200 rpm

### <Method for manufacturing resin composition>

A polybutylene terephthalate resin produced by direct esterification and a master batch or potassium acetate were mixed at a ratio shown in Table 1 to prepare a raw material. This raw material was fed into a twin screw extruder (TEX-30, manufactured by The Japan Steel Works, Ltd.) and was molten and kneaded to produce a polybutylene terephthalate resin pellet. However, as described later, in Example 6, since a mixture prepared by dry-blending of a polybutylene terephthalate resin produced by direct esterification and a master batch was directly used for molding, the production of a resin composition by melting and kneading was not performed. The conditions excluding cooling time are as follows.

### (Melting and kneading conditions)

Cylinder temperature: 260°C
Screw speed: 130 rpm

### <Production of molded article>

Each of the resin pellets of Examples and Comparative Examples was supplied to an injection molding machine ("J75EP", manufactured by The Japan Steel Works, Ltd.), and a molded article (100 mm × 40 mm × 2 mm) was produced under the following molding conditions. However, in Example 6, a mixture prepared by dry-blending a polybutylene terephthalate resin produced by direct esterification and a master batch (each ratio is shown in Table 1) was used instead of the resin pellet. The raw material at the time of producing each molded article is shown in Table 1. The term "Molted and kneaded product" in Table 1 refers to a resin pellet.

### (Molding conditions)

Molding conditions: Cylinder temperature: 250°C
Injection pressure: 60 (MPa)
Injection speed: 1.0 (m/min)
Mold temperature: 60 (°C)

### <Measurement VOC emission amount>

Each of the molded articles in Examples and Comparative Examples was cut into pieces of 10 to 25 mg to prepare a sample. About 2 g of the samples was put into a 22-mL vial, and the weight of the sample was precisely measured. The vial was sealed, and the sample was heated at 120°C for 5 hours with HS-GC. The peak integral area of volatile organic components detected by gas chromatography was calculated and was converted into the weight in terms of acetone used as a standard to determine the volatile organic compound amount per weight of the molded article (µgC/g). The results are shown in Table 1.

### <Measurement of hue (b value)>

The hue (b value) of each of the molded articles of Examples and Comparative Examples was measured with a spectroscopic color difference meter (SE6000, manufactured by Nippon Denshoku Industries Co., Ltd.). The results are shown in Table 1. The b value is an index of the degree of yellowness in the Hunter Lab color system, and a lower value, for example, 4 or less is preferred because the yellowness of a molded article is low.

### <Measurement of amount of terminal carboxyl groups of polybutylene terephthalate resin in molded article>

Each of the molded articles of Examples and Comparative Examples was pulverized. The resulting pulverized sample was dissolved in benzyl alcohol at 215°C for 10 minutes, and the amount of terminal carboxyl groups was then measured by titration with an aqueous solution of 0.01 N sodium hydroxide. The results are shown in Table 1.

**[Table 1]**

| | Compar ative Example 1 | Example 1 | Example 2 | Example 3 | Example 4 | Example 5 | Example 6 | Comparative Example 2 |
|---|---|---|---|---|---|---|---|---|
| PBT (% by mass) | 100 | 99 | 97 | 96 | 95 | 90 | 97 | 99.995 |
| Master batch (% by mass) | 0 | 1 | 3 | 4 | 5 | 10 | 3 | 0 |
| Potassium acetate (Direct addition, % by mass) | 0 | 0 | 0 | 0 | 0 | 0 | 0 | 0.005 |
| Addition amount of potass ium acetate (mass ppm) | 0 | 10 | 30 | 40 | 50 | 100 | 30 | 50 |
| Raw material at the time of producing molded article | Molten and kneaded product | Molten and kneaded product | Molten and kneaded product | Molten and kneaded product | Molten and kneaded product | Molten and kneaded product | Dry blended product | Molten and kneaded product |
| VOC amount (µgG/g) | 111 | 46 | 24 | 22 | 21 | 27 | 29 | 38 |
| Hue (b value) | 3.3 | 3.3 | 3.2 | 3.8 | 4.3 | 4.6 | 3.7 | 4.5 |
| CEG of PBT in molded article (meq/kg) | 26.7 | 22.1 | 20.4 | 20.1 | 19.7 | 19.1 | 29.0 | 18.0 |

As obvious from Table 1, it was demonstrated that the combination use of a combination of a polybutylene terephthalate resin produced by direct esterification with an alkali compound added in a master batch form reduces the amount of terminal carboxyl groups of the polybutylene terephthalate resin in a molded article and also notably reduces the VOC amount emitted from the molded article, compared to the case of directly adding the alkali compound. It was also demonstrated that the hue (b value) of a molded article is improved by controlling the addition amount of the alkali compound to 10 to 45 mass ppm.

As obvious from the comparison between Example 2 and Example 6, the molded article of Example 2 (used a molted and kneaded product as the raw material) underwent pelletization by melting and kneading and thereby received thermal history one time more than the molded article of Example 6 (used a dry blended product as the raw material), but surprisingly the molded article of Example 2 was excellent in all the VOC amount, hue, and CEG, compared to the molded article of Example 6.

## Claims

1. A method for manufacturing a polybutylene terephthalate resin composition including a polybutylene terephthalate resin produced by direct esterification and an alkali compound, the method comprising:
melting and kneading a master batch including a polyalkylene terephthalate resin and the alkali compound with the polybutylene terephthalate resin.

2. The manufacturing method according to Claim 1, further comprising preparing the master batch by melting and kneading the polyalkylene terephthalate resin and the alkali compound.

3. The manufacturing method according to Claim 1, further comprising preparing the master batch during the production of the polyalkylene terephthalate resin by an esterification reaction or a transesterification reaction and/or a polycondensation reaction in the presence of the alkali compound.

4. The manufacturing method according to any one of Claims 1 to 3, wherein an amount of the alkali compound in the polybutylene terephthalate resin composition is 10 to 45 mass ppm based on the total mass of the polybutylene terephthalate resin and the alkali compound.

5. The manufacturing method according to any one of Claims 1 to 4, wherein the alkali compound is potassium acetate.

6. A method for manufacturing a polybutylene terephthalate resin molded article including a polybutylene terephthalate resin produced by direct esterification and an alkali compound, the method comprising:
preparing a polybutylene terephthalate resin composition by the method according to any one of Claims 1 to 5 as a molding pellet, and then molding the polybutylene terephthalate resin composition molding pellet into the polybutylene terephthalate resin molded article.

7. A method for manufacturing a polybutylene terephthalate resin molded article including a polybutylene terephthalate resin produced by direct esterification and an alkali compound, the method comprising:
dry-blending a master batch including a polyalkylene terephthalate resin and the alkali compound with the polybutylene terephthalate resin and then molding the blended mixture into the polybutylene terephthalate resin molded article.

8. The manufacturing method according to Claim 7, further comprising preparing the master batch by melting and kneading the polyalkylene terephthalate resin and the alkali compound.

9. The manufacturing method according to Claim 7, further comprising preparing the master batch during the production of the polyalkylene terephthalate resin by an esterification reaction or a transesterification reaction and/or a polycondensation reaction in the presence of the alkali compound.

10. The manufacturing method according to any one of Claims 7 to 9, wherein an amount of the alkali compound in the polybutylene terephthalate resin molded article is 10 to 45 mass ppm based on the total mass of the polybutylene terephthalate resin and the alkali compound.

11. The manufacturing method according to any one of Claims 7 to 10, wherein the alkali compound is potassium acetate.

12. The manufacturing method according to any one of Claims 6 to 11, wherein a VOC emission amount from the molded article is 50 ugC/g or less when measured by a VOC measuring method defined in the German Association of the Automotive Industry VDA 277.

13. The manufacturing method according to any one of Claims 6 to 12, wherein the polybutylene terephthalate resin in the molded article has terminal carboxyl groups in an amount of 40 meq/kg or less.

14. The manufacturing method according to any one of Claims 6 to 13, wherein the molded article is an interior part of an automobile.

## Patentansprüche

1. Verfahren zur Herstellung einer Polybutylen-Terephthalat-Harzzusammensetzung, die ein durch direkte Veresterung hergestelltes Polybutylen-Terephthalat-Harz und eine Alkali-Verbindung enthält, wobei das Verfahren umfasst:
das Schmelzen und Kneten eines Masterbatchs, das ein Polyalkylen-Terephthalat-Harz und die Alkali-Verbindung enthält, mit dem Polybutylen-Terephthalat-Harz.

2. Herstellungsverfahren nach Anspruch 1, weiter umfassend die Herstellung des Masterbatchs durch Schmelzen und Kneten des Polyalkylen-Terephthalat-Harzes und der Alkali-Verbindung.

3. Herstellungsverfahren nach Anspruch 1, weiter umfassend die Herstellung des Masterbatchs während der Herstellung des Polyalkylen-Terephthalat-Harzes durch eine Veresterungs-Reaktion oder eine Umesterungs-Reaktion und/oder eine Polykondensations-Reaktion in Gegenwart der Alkali-Verbindung.

4. Herstellungsverfahren nach einem der Ansprüche 1 bis 3, wobei eine Menge der Alkali-Verbindung in der Polybutylen-Terephthalat-Harzzusammensetzung 10 bis 45 Massen-ppm, bezogen auf die Gesamtmasse des Polybutylen-Terephthalat-Harzes und der Alkali-Verbindung, beträgt.

5. Herstellungsverfahren nach einem der Ansprüche 1 bis 4, wobei die Alkali-Verbindung Kaliumacetat ist.

6. Verfahren zur Herstellung eines Polybutylen-Terephthalat-Harz-Formgegenstands, der ein durch direkte Veresterung hergestelltes Polybutylen-Terephthalat-Harz und eine Alkali-Verbindung enthält, wobei das Verfahren umfasst:
Herstellung einer Polybutylen-Terephthalat-Harz-Zusammensetzung durch das Verfahren nach einem der Ansprüche 1 bis 5 als ein Formpellet und dann Formen der Formpellets aus der Polybutylen-Terephthalat-Harz-Zusammensetzung zu dem Polybutylen-Terephthalat-Harz-Formgegenstand.

7. Verfahren zur Herstellung eines Polybutylen-Terephthalat-Harz-Formgegenstands, der ein durch direkte Veresterung hergestelltes Polybutylen-Terephthalat-Harz und eine Alkali-Verbindung enthält, wobei das Verfahren umfasst:
Trocken-Mischen eines Masterbatchs, das ein Polyalkylen-Terephthalat-Harz und die Alkali-Verbindung enthält, mit dem Polybutylen-Terephthalat-Harz und dann Formen des gemischten Gemisches zu dem Polybutylen-Terephthalat-Harz-Formgegenstand.

8. Herstellungsverfahren nach Anspruch 7, weiter umfassend die Herstellung des Masterbatchs durch Schmelzen und Kneten des Polyalkylen-Terephthalat-Harzes und der Alkali-Verbindung.

9. Herstellungsverfahren nach Anspruch 7, weiter umfassend die Herstellung des Masterbatchs während der Herstellung des Polyalkylen-Terephthalat-Harzes durch eine Veresterungs-Reaktion oder eine Umesterungs-Reaktion und/oder eine Polykondensations-Reaktion in Gegenwart der Alkali-Verbindung.

10. Herstellungsverfahren nach einem der Ansprüche 7 bis 9, wobei eine Menge der Alkali-Verbindung in dem Polybutylen-Terephthalat-Harz-Formgegenstand 10 bis 45 Massen-ppm, bezogen auf die Gesamtmasse des Polybutylen-Terephthalat-Harzes und der Alkali-Verbindung, beträgt.

11. Herstellungsverfahren nach einem der Ansprüche 7 bis 10, wobei die Alkali-Verbindung Kaliumacetat ist.

12. Herstellungsverfahren nach einem der Ansprüche 6 bis 11, wobei eine VOC-Emissionsmenge aus dem Formgegenstand 50 µgC/g oder weniger beträgt, wenn sie mit einem VOC-Messverfahren gemessen wird, das in der VDA 277 vom deutschen Verband der Automobilindustrie definiert ist.

13. Herstellungsverfahren nach einem der Ansprüche 6 bis 12, wobei das Polybutylen-Terephthalat-Harz in dem Formgegenstand endständige Carboxylgruppen in einer Menge von 40 mÄquiv./kg oder weniger aufweist.

14. Herstellungsverfahren nach einem der Ansprüche 6 bis 13, wobei der Formgegenstand ein Innenteil eines Automobils ist.

## Revendications

1. Procédé pour fabriquer une composition de résine de poly(téréphtalate de butylène) comprenant une résine de poly(téréphtalate de butylène) produite par estérification directe et un composé alcalin, le procédé comprenant :
la fusion et le malaxage d'un mélange maître comprenant une résine de poly(téréphtalate d'alkylène) et le composé alcali avec la résine de poly(téréphtalate de butylène).

2. Procédé de fabrication selon la revendication 1, comprenant en outre la préparation du mélange maître par fusion et malaxage de la résine de poly(téréphtalate d'alkylène) et du composé alcalin.

3. Procédé de fabrication selon la revendication 1, comprenant en outre la préparation du mélange maître pendant la production de la résine de poly(téréphtalate d'alkylène) par une réaction d'estérification ou une réaction de trans-estérification et/ou une réaction de polycondensation en présence du composé alcalin.

4. Procédé de fabrication selon l'une quelconque des revendications 1 à 3, dans lequel la quantité du composé alcalin dans la composition de résine de poly(téréphtalate de butylène) est de 10 à 45 ppm en masse basées sur la masse totale de la résine de poly(téréphtalate de butylène) et du composé alcalin.

5. Procédé de fabrication selon l'une quelconque des revendications 1 à 4, dans lequel le composé alcalin est l'acétate de potassium.

6. Procédé pour fabriquer un article moulé en résine de poly(téréphtalate de butylène) comprenant une résine de poly(téréphtalate de butylène) produite par estérification directe et un composé alcalin, le procédé comprenant :
la préparation d'une composition de résine de poly(téréphtalate de butylène) par le procédé de l'une quelconque des revendications 1 à 5 sous la forme d'une pastille de moulage, et ensuite moulage de la pastille de moulage en composition de résine de poly(téréphtalate de butylène) en l'article moulé en résine de poly(téréphtalate de butylène).

7. Procédé pour fabriquer un article moulé en résine de poly(téréphtalate de butylène) comprenant une résine de poly(téréphtalate de butylène) produite par estérification directe et un composé alcalin, le procédé comprenant :
la combinaison à sec d'un mélange maître comprenant une résine de poly(téréphtalate alkylène) et le composé alcali avec la résine de poly(téréphtalate de butylène), puis le moulage du mélange combiné en l'article moulé en résine de poly(téréphtalate de butylène).

8. Procédé de fabrication selon la revendication 7, comprenant en outre la préparation du mélange maître par fusion et malaxage de la résine de poly(téréphtalate d'alkylène) et du composé alcalin.

9. Procédé de fabrication selon la revendication 7, comprenant en outre la préparation du mélange maître pendant la production de la résine de poly(téréphtalate d'alkylène) par une réaction d'estérification ou une réaction de trans-estérification et/ou une réaction de polycondensation en présence du composé alcalin.

10. Procédé de fabrication selon l'une quelconque des revendications 7 à 9, dans lequel la quantité du composé alcalin dans l'article moulé en résine de poly(téréphtalate de butylène) est de 10 à 45 ppm en masse basées sur la masse totale de la résine de poly(téréphtalate de butylène) et du composé alcalin.

11. Procédé de fabrication selon l'une quelconque des revendications 7 à 10, dans lequel le composé alcalin est l'acétate de potassium.

12. Procédé de fabrication selon l'une quelconque des revendications 6 à 11, dans lequel la quantité d'émission de COV par l'article moulé est de 50 µgC/g ou moins quand elle est mesurée par un procédé de mesure de COV défini dans l'Association Allemande de l'Industrie Automobile VDA 277.

13. Procédé de fabrication selon l'une quelconque des revendications 6 à 12, dans lequel la résine de poly(téréphtalate de butylène) dans l'article moulé a des groupes carboxyle terminaux en une quantité de 40 méq/kg ou moins.

14. Procédé de fabrication selon l'une quelconque des revendications 6 à 13, dans lequel l'article moulé est une pièce d'intérieur d'une automobile.
